# EUROPÄISCHE PATENTSCHRIFT

(11) **EP 2 840 284 B1**
(45) Veröffentlichungstag und Bekanntmachung des Hinweises auf die Patenterteilung: **06.12.2017**
(21) Anmeldenummer: 14002734.3
(22) Anmeldetag: 05.08.2014
(51) Int. Cl.: F16H 61/4035, F16H 61/4043, F16H 59/72, F01P 7/04, F16H 61/47

(54) **Hydraulische Lüftersteuerung**
Hydraulic fan control
Commande de ventilateur hydraulique

(30) Priorität: 21.08.2013 DE 102013014286
(43) Veröffentlichungstag der Anmeldung: 25.02.2015
(73) Patentinhaber: Hydac Fluidtechnik GmbH, 66280 Sulzbach/Saar (DE)
(72) Erfinder: Bär, Harald, 66346 Püttlingen (DE); Schäfer, Josef Christian, 66740 Saarlouis (DE); Friebe, Ferdinand, 66111 Saarbrücken (DE)
(74) Vertreter: Bartels & Partner

(56) Entgegenhaltungen:
- EP-A2- 0 097 230
- DE-A1-102010 007 247
- US-A- 3 401 605
- US-A- 3 664 129

## Beschreibung

Die Erfindung betrifft eine hydraulische Lüftersteuerung mit den Merkmalen im Oberbegriff von Anspruch 1.

Ein hydraulischer Lüftermotor hat in Abhängigkeit von einer Öltemperatur seine Drehzahl zu verändern. Bei kaltem Öl soll der Motor nach Möglichkeit nicht anlaufen und bei sich erwärmendem Öl über einen Schwellenwert hinaus soll die Motordrehzahl zwecks Erreichen einer zunehmenden Kühlleistung stetig ansteigen. Bei nicht laufendem Lüftermotor soll das Öl mit geringem Druckverlust über eine Bypassleitung zu einem Tank abfließen können.

Um diesen Vorgaben gerecht zu werden, ist es im Stand der Technik bekannt, Steuerungen für einen hydraulischen Lüfter einzusetzen, die über rein thermisch vorgesteuerte Bypass-Druckbegrenzungsventile verfügen. Mithin wird, da die Lüfterdrehzahl abhängig ist vom Druck, in einer Zulaufleitung dieser Druck von einem üblicherweise parallel zum Lüftermotor angeordneten, vorgesteuerten Druckventil eingestellt. Die Regelung der Lüftermotordrehzahl selbst erfolgt über ein im Zulaufbereich des Lüfters angeordnetes Thermoventil, welches ständig von Hydraulikflüssigkeit umströmt wird. Das genannte Thermoventil regelt dabei in Abhängigkeit von der Öltemperatur den Vorsteuerdruck für das Druckventil im Lüftermotor-Bypass.

Das angesprochene Thermoventil besitzt als Verstellaktuator ein Dehnstoffelement, wobei heute überwiegend kaufübliche Wachselemente zum Einsatz kommen, wobei sich das Dehnstoffelement ab einer gewissen Temperatur ausdehnt und die Kraft auf die Vorsteuerung des Druckventils erhöht. Theoretisch gibt es dabei einen Temperatur-Regelbereich von bis zu 20 Kelvin mit einer unstetigen Kennlinie und das jeweilige Temperatur-Regelniveau ist wählbar abhängig vom eingesetzten Dehnstoffelement. Die Vorteile der dahingehend bekannten Lösung liegen in der rein thermischen Lüftersteuerung, wobei keine Sensorik oder sonstige elektrische Steuerungstechnik notwendig ist. Ferner bauen die bekannten Lösungen kompakt auf und zumindest in der Theorie stellt die Lösung eine energieeffiziente Lüftersteuerung dar, die bedarfsgerecht die Kühlleistung bereitstellt.

Als Nachteil hat sich jedoch ein schlechtes Proportionalverhalten erwiesen bezogen auf das Dehnstoffelement. Bei einem angegebenen Proportionalbereich von 20 Kelvin läuft der Lüftermotor in der Regel bei kaltem Öl gar nicht; bereits bei Übersteigen eines sehr kleinen Temperaturbereichs läuft der Lüftermotor dann aber mit maximaler Drehzahl. Für den Anwender ist die dahingehende Steuerungscharakteristik regelmäßig unzureichend, da die Lüfterdrehzahl über einen Bereich von mindestens 10 °C bis 20 °C der Öltemperatur nachfolgen sollte.

Des Weiteren ist nur eine Temperaturmessstelle vorgesehen, d.h. es wird nur die Zulauftemperatur, sprich die Öltemperatur des Hydrauliktanks zur Regelung der Lüfterdrehzahl verwendet. Dieses kann einen Zeitverzug des Anstiegs der Lüfterdrehzahl mit sich bringen bei rasch ansteigender Öltemperatur im Rücklauf der Arbeitshydraulik.

Des Weiteren kommt es zu Alterungserscheinungen des Dehnstoffelements (Wachselement), welches zu einer signifikanten Verschlechterung der Hub- und Krafteigenschaften führt. Folglich verschlechtert sich die Lüfterdrehzahlregelung.

Die DE 2010 007 247 A1 beschreibt eine hydraulische Lüftersteuerung, bestehend aus mindestens einem Lüftermotor, einer Druckversorgungseinrichtung, insbesondere Hydropumpe, zum Versorgen des Lüftermotors mit einem Druckmedium, insbesondere in Form von Hydrauliköl, und einem die Regelung der Lüftermotordrehzahl steuernden Thermoventil, wobei das Thermoventil einen Energiespeicher in Form einer Druckfeder aufweist.

Die EP 0 097 230 A2 zeigt eine hydraulische Lüftersteuerung auf, bestehend aus mindestens einem Lüftermotor, einer Druckversorgungseinrichtung, insbesondere Hydropumpe, zum Versorgen des Lüftermotors mit einem Druckmedium, insbesondere in Form von Hydrauliköl, einem Bypass-Druckbegrenzungsventil, das den möglichen Fluidfluss zwischen der Druckversorgungseinrichtung und einem Tankanschluss steuert, und einem Vorsteuer-Druckbegrenzungsventil für die Vorsteuerung des Bypass-Druckbegrenzungsventils, wobei Vorsteuer-Druckbegrenzungsventil ein Thermoventil ist und einen Energiespeicher in Form einer Druckfeder aufweist.

Ausgehend von diesem Stand der Technik liegt der Erfindung die Aufgabe zugrunde, eine hydraulische Lüftersteuerung zu schaffen, die unter Beibehalten der vorstehend genannten Vorteile jedenfalls die beschriebenen Nachteile mit Sicherheit vermeidet. Eine dahingehende Aufgabe löst eine hydraulische Lüftersteuerung mit den Merkmalen des Patentanspruchs 1 oder mit den Merkmalen des Patentanspruchs 2.

Gemäß dem Kennzeichen von Anspruch 1 und 2 ist vorgesehen, dass die Druckfeder aus einer Formgedächtnislegierung besteht, die eine temperaturabhängige Kraft-Hub-Kennlinie besitzt.

Dadurch, dass das Thermoventil einen Energiespeicher, in Form einer Druckfeder, bestehend aus einer Formgedächtnislegierung, aufweist oder dass die hydraulische Lüftersteuerung weiter bestehend aufgebaut ist aus mindestens
- einem vorzugsweise Kühler-Thermo-Bypassventil, das den Rücklauf des Druckmediums aus einer an die Lüftereinrichtung anschließbaren Arbeitshydraulik steuert,
- einem Bypass-Druckbegrenzungsventil, das den möglichen Fluidfluss zwischen der Druckversorgungseinrichtung und einem Tankanschluss steuert, und
- einem Vorsteuer-Druckbegrenzungsventil für die Vorsteuerung des Bypass-Druckbegrenzungsventils,
ist sichergestellt, dass in jedem Fall die benötigte Kühlleistung bedarfsgerecht eingeregelt wird. Dabei wird die bekannte Schaltung zur Steuerung eines hydraulischen Lüftermotors über ein rein thermisch vorgesteuertes Bypass-Druckbegrenzungsventil an einschlägigen konstruktiven Stellen maßgebend geändert.

Mit den vorstehend genannten Maßnahmen ist jedenfalls eine energieeffiziente Lüftersteuerung erreicht mit bedarfsgerechter Regelung der Kühlleistung, was bedeutet, dass die Lüfterdrehzahl bei Erreichen eines Temperatur-Schwellenwertes nur mit zunehmender Öltemperatur weiter ansteigt.

Zur besseren Regelung der Lüfterdrehzahl kann darüber hinaus ein zusätzliches Thermoelement bevorzugt an anderer Stelle platziert werden, um das Lüfter-Bypassventil zu beeinflussen. Dadurch kann flexibel auf die jeweilige Applikation und die klimatischen Bedingungen hin orientiert die Lüftersteuerung gestaltet werden. Des Weiteren weist das Thermoelement keine Alterungserscheinungen auf, so dass lang andauernd ein Betrieb sichergestellt ist.

Das Kühler-Thermo-Bypassventil hat vorrangig die Aufgabe, das von einem nachgeschalteten Kreislauf, insbesondere in Form einer Arbeitshydraulik, rückfließende Öl zum Tank bzw. zum Kühler zu leiten. Bei kaltem Rücklauföl soll die gesamte Rücklaufmenge mit geringem Druckverlust zurück zum Tank geleitet werden. Bei ansteigender Öltemperatur über einen gewissen Wert hinaus beginnt die Teilung des Ölstroms, so dass nun eine Teilmenge über den Kühler fließt. Bei Erreichen einer weiteren Temperaturschwelle strömt die gesamte Rücklaufmenge über den Kühler. Dabei können sich die Temperaturbereiche des Kühler-Thermo-Bypassventils und die des Vorsteuer-Druckbegrenzungsventils in gewissen Grenzen überschneiden.

Die Druckversorgungseinrichtung unter Einsatz einer Konstant-Hydropumpe liefert bevorzugt einen konstanten Volumenstrom und das Bypass-Druckbegrenzungsventil besitzt eine Zulaufblende, über die ein kleiner Volumenstrom durch das Vorsteuerventil direkt zum Tank zurückfließen kann. Bei kaltem Tanköl ist die Federseite des Bypass-Druckbegrenzungsventils entlastet und der Kolben geht aufgrund der entstehenden Druckdifferenz an der Blende in Öffnungsstellung.

Bei heißer werdendem Zulauföl von der Pumpe wird bei Erreichen der Aktivierungstemperatur des Formgedächtnismaterials eine Kraft auf den Vorsteuersitz aufgebaut und der Druck im Federraum des Bypass-Druckbegrenzungsventils steigt. Dadurch steigt die Drehzahl des Lüftermotors an, wobei mit einem zusätzlichen Einstellmechanismus die Öffnungsstellung des Vorsteuersitzes eingestellt werden kann.

Weitere bevorzugte Ausführungsformen der erfindungsgemäßen Lösung sind Gegenstand der sonstigen Unteransprüche. Durch sinnfällige Kombinationen der Merkmalsausgestaltungen nach den Unteransprüchen lassen sich eine Vielzahl von Kombinationen mit Platzierung der Thermoventile an verschiedenen Orten, die nicht alle dargestellt sind, innerhalb der hydraulischen Lüftersteuerung erreichen.

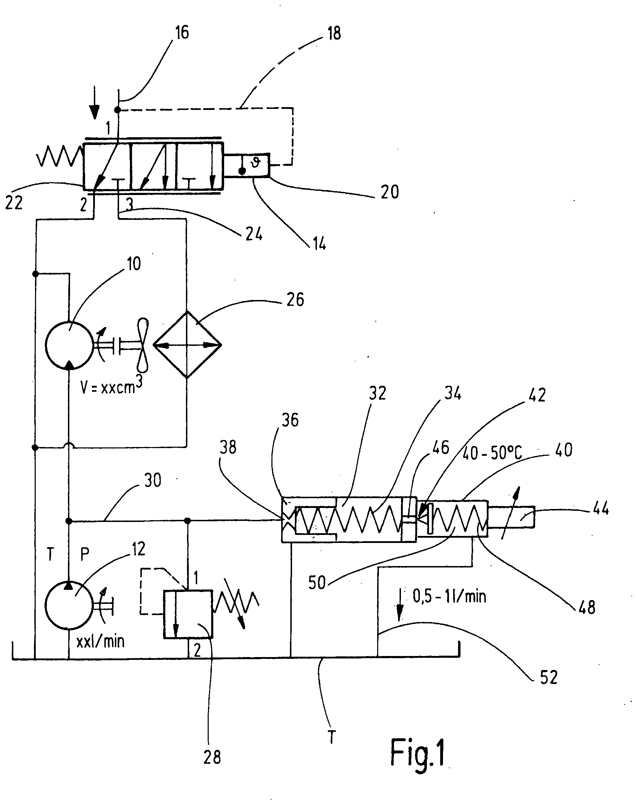

Im Folgenden wird die erfindungsgemäße hydraulische Lüftersteuerung anhand verschiedener Ausführungsbeispiele nach der Zeichnung näher erläutert. Dabei zeigen in prinzipieller und nicht maßstäblicher Darstellung in der Art hydraulischer Schaltpläne die
- Fig. 1 bis 7: verschiedene Ausführungsformen der erfindungsgemäßen hydraulischen Lüftersteuerung.

Die hydraulische Lüftersteuerung nach der Fig. 1 betrifft dem Grunde nach eine vereinfachte Schaltung mit Thermoelement für die Vorsteuerung des Lüfter-DB's. Die Schaltung beinhaltet z. T. Komponenten nach dem Stand der Technik und weist insbesondere einen Lüftermotor 10 auf, der als Hydromotor ausgebildet von einem Druckmedium, insbesondere in Form von Hydrauliköl antreibbar ist. Für die Versorgung des Lüftermotors 10 dient eine Pumpe 12, insbesondere in Form einer Hydropumpe, besonders bevorzugt in Form einer Konstantpumpe. Die Pumpe 12 fördert Druckmedium aus einem mit T bezeichneten Tank. Insoweit bildet die Pumpe 12 mit den zugeordneten Leitungen die Druckversorgungseinrichtung für die hydraulische Lüftersteuerung aus.

Des Weiteren zeigt die Schaltung nach der Fig. 1 ein mit 14 bezeichnetes Kühler-Thermo-Bypassventil. Das dahingehende Kühler-Thermo-Bypassventil 14 steuert den Rücklauf des Druckmediums aus einer an die Lüftereinrichtung angeschlossenen Arbeitshydraulik (nicht dargestellt), die über einen Eingangsanschluss 16 an das Bypassventil 14 angeschlossen ist. Über einen Temperaturabgriff 18 und ein Temperatursteuerelement 20 lässt sich das Bypassventil 14 entgegen der Wirkung einer Rückstellfeder in die einzelnen Schalt- oder Verfahrstellung bringen. Demgemäß ist ausgangsseitig das Bypassventil 14 über einen Ausgangsanschluss 22 und eine Rücklaufleitung an den Tank T angeschlossen und über einen weiteren Ausgangsanschluss 24 eingangsseitig mit einem Durchlaufkühler 26 verbunden. Ausgangsseitig ist der Kühler 26 wiederum an die Tankrücklaufleitung zum Tank T hin angeschlossen. Bei kaltem Rücklauföl nimmt das Ventil 14 seine in der Fig. 1 gezeigte ganz linke Schaltstellung ein. Bei ansteigender Öltemperatur über einen gewissen Schwellenwert hinaus beginnt die Teilung des Ölstroms, so dass nun eine Teilmenge an den Tank T zurückfließt und die andere Teilmenge über den Kühler 26 gelangt. Die dahingehende Schaltung entspricht dem mittleren Schaltstellungsbereich des Ventiles 14. Bei Erreichen einer weiteren Temperaturschwelle wird dann das Ventil 14 in Blickrichtung auf die Fig. 1 gesehen in seine ganz rechte Schaltstellung gebracht, bei dem der Tankrücklauf gesperrt ist, und die gesamte zu kühlende Menge gelangt über den weiteren Ausgangsanschluss 24 zum Kühler 26. Insoweit strömt dann die gesamte Rücklaufmenge, die am Eingangsanschluss 16 des Ventiles 14 ansteht, über den Kühler. Die Temperaturbereiche des Kühler-Thermo-Bypassventils 14 und die Vorsteuer-DB's können sich in gewissen Grenzen überschneiden.

Des Weiteren ist parallel zur Hauptstromrichtung der Pumpe 12 an deren Ausgang ein Druckbegrenzungsventil 28 angeordnet, das ausgangsseitig an den Tank angeschlossen ist. In den dahingehenden Leitungszweig 30 ist auf der Ausgangsseite der Pumpe 12 ein Bypass-Druckbegrenzungsventil 32 geschaltet, das einen gegen eine Rückstellfeder 34 verschiebbaren Kolben 36 aufweist, der u.a. eine Zulaufblende 38 im Gehäuse des Druckbegrenzungsventils 32 angeordnet entsprechend ansteuert. Insoweit kann bei entsprechend zurückgefahrenem Kolben 36 entgegen der Wirkung der Rückstellfeder 34 eine fluidführende Verbindung zwischen Leitungszweig 30 und dem Tank T über die Zulaufblende 38 hergestellt sein. Am gegenüberliegenden Ende zu der Zulaufblende 38 des Ventils 32 ist ein Vorsteuer-Druckbegrenzungsventil 40 angeordnet mit einem als Ganzes mit 42 bezeichneten Vorsteuer-Ventilsitz und einer Vorsteuer-Ventileinstell-Einrichtung 44. Der angesprochene Vorsteuerventilsitz ist aus einem Ventilkegel gebildet, der eine Durchgangsöffnung 46 im Boden des Ventiles 32 ansteuert. Des Weiteren stützt sich wie gezeigt der Ventilkegel über einen Federteller an einem Energiespeicher ab in Form einer Druckfeder 48, bestehend aus einer sogenannten Formgedächtnislegierung. Die Druckfeder 48 ist in einem Vorsteuerraum 50 des Ventiles 40 geführt, der eine fluid- oder medienführende Verbindung 52 zum Tank T aufweist.

Wie bereits dargelegt, soll die Pumpe 12 einen konstanten Volumenstrom liefern, und über die Zulaufblende 38 des Bypass-Druckbegrenzungsventiles 32 kann ein kleiner Volumenstrom durch das Vorsteuerventil zurück zum Tank fließen. Bei kaltem Tanköl ist die Federseite des Bypass-Druckbegrenzungsventils 32 entlastet, und der Kolben 36 geht aufgrund der entstehenden Druckdifferenz an der Zulaufblende 38 in die Öffnungsstellung. Bei heißer werdendem Zulauföl von der Pumpe 12 wird bei Erreichen der Aktivierungstemperatur des Formgedächtnismaterials für die Druckfeder 48 eine Kraft auf den Vorsteuerventilsitz 42 aufgebaut, und der Druck im Federraum mit der Rückstellfeder 34 des Bypass-Druckbegrenzungsventils 32 steigt an. Dadurch steigt auch die Drehzahl des Lüftermotors 10 an. Mit dem gezeigten Verstellmechanismus 44 kann die Öffnungsstellung des Vorsteuer-Ventilsitzes 42 entsprechend den Gegebenheiten vor Ort eingestellt werden.

Ist das Bypassventil 32 insgesamt in geschlossener Stellung, ist mithin der Lüftermotor 10 angetrieben, und bei geöffneter Stellung des Bypass-Druckbegrenzungsventils 32 steht der Lüfter. Die einschlägigen Temperatur- und Durchflusswerte lassen sich exemplarisch aus der Fig. 1 ersehen.

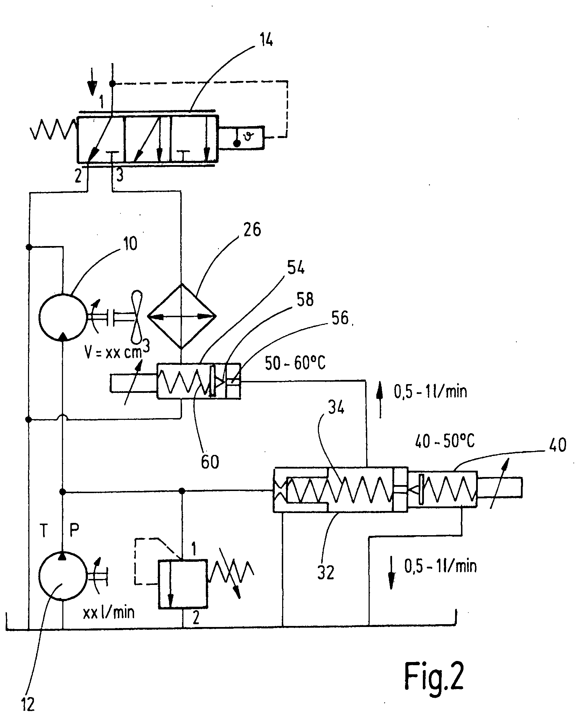

Die folgenden Ausführungsformen nach den nachfolgenden Figuren werden nur noch insofern beschrieben, als sie sich wesentlich von dem Ausführungsbeispiel nach der Fig. 1 unterscheiden, wobei die bisher getroffenen Ausführungen der Fig. 1 mit ihren Bezugszeichen entsprechend auch für die nachfolgenden Ausführungsbeispiele gelten. Insoweit werden im Folgenden für die vergleichbaren Komponenten der Lüftersteuerung dieselben Bezugszeichen eingesetzt. Bei der Ausführungsform nach der Fig. 2 handelt es sich um eine gegenüber der Fig. 1 erweiterte Schaltung, wobei der Vorsteuerdruck des Bypass-Druckbegrenzungsventils 32 bei der vorliegenden Lösung von zwei getrennten Vorsteuer-Druckbegrenzungsventilen 40 und 54 beeinflusst wird. Dabei funktioniert das erste Vorsteuerventil 40 wie für Fig. 1 beschrieben, und das zweite Vorsteuer-Druckbegrenzungsventil 54 ist in die Ablaufleitung vom Kühler 16 zum Tank T geschaltet. Insoweit ist für einen funktionssicheren Gebrauch die Durchgangsöffnung 56 des zweiten Vorsteuerventils 54 medienführend mit der Federkammer mit der Rückstellfeder 34 des Bypass-Druckbegrenzungsventils 32 verbunden. Insoweit steuert der Vorsteuerventilsitz 58 unter Einbezug eines weiteren Energiespeichers in Form einer Druckfeder 60 gleichfalls mit Formgedächtnislegierung konzipiert die Durchgangsöffnung 56 an und beeinflusst insoweit wie das erste Vorsteuer-Druckbegrenzungsventil 40 das Bypass-druckbegrenzungsventil 32.

Das zweite Vorsteuerventil 54 ist mithin in der Lage, den Drehzahl-Regelbereich des Lüftermotors 10 zu erweitern, wobei es über die Ausgangsleitung des Kühlers 26 die Ölausgangstemperatur zur Ansteuerung erfährt. Insoweit wird der Druckeinstellbereich im Federraum des Vorsteuer-Bypassventils 32 erhöht.

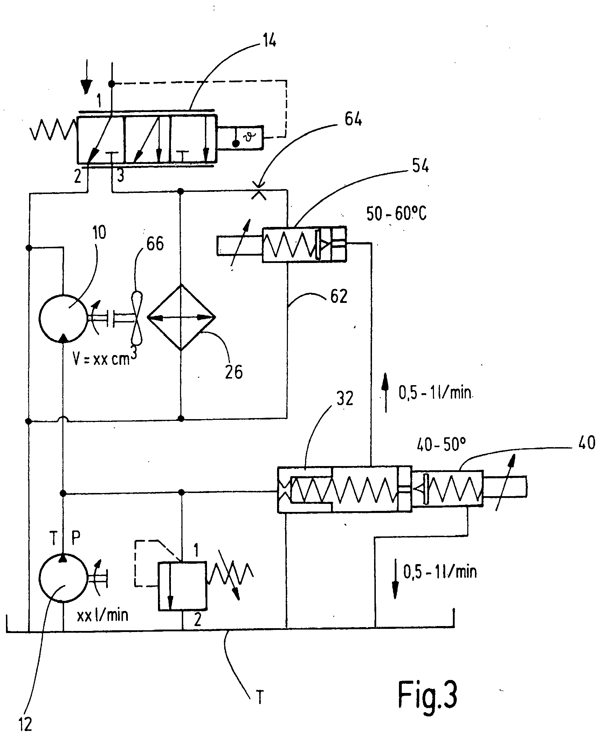

Bei der Ausführungsform nach der Fig. 3, die weitgehend der Ausführungsform nach der Fig. 2 entspricht, ist jedoch das zweite Vorsteuer-Druckbegrenzungsventil 54 in eine Bypassleitung 62 zum Kühler 26 geschaltet, und der Vorsteuerraum mit dem Energiespeicher 60 ist an die Bypassleitung 62 angeschlossen, wobei eingangsseitig zum zweiten Vorsteuerventil 54 noch eine Blende 64 in die Bypassleitung 62 geschaltet ist. Es sei an dieser Stelle erwähnt, dass der Motor 10 selbstredend als Lüftermotor über Lüfterflügel 66 verfügt, um eine verbesserte Luftdurchströmung für den Kühler 26 zu erhalten.

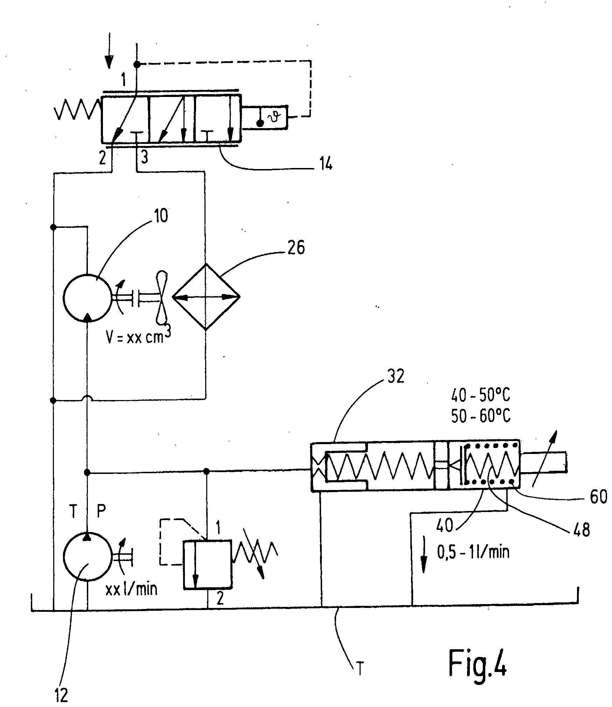

Bei der Lösung nach der Fig. 4 wird der Vorsteuerdruck wiederum von einem einzelnen Vorsteuerventil 40 erbracht, das diesmal aber zwei verschiedene Energiespeicher mit Formgedächtniselementen für unterschiedliche Temperaturbereiche aufweist. Die als Druckfedern 48, 60 ausgebildeten Formgedächtniselemente sind dabei konzentrisch zueinander angeordnet und weisen die in der Fig. 4 angegebenen unterschiedlichen Temperaturansteuerbereiche auf.

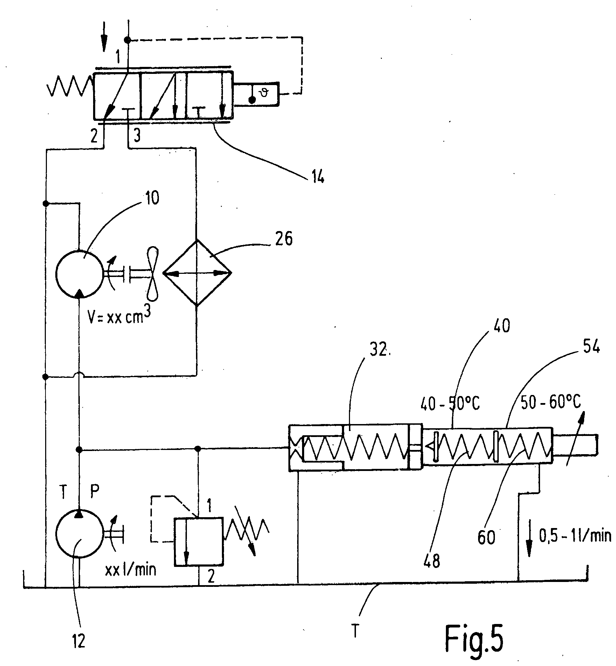

Bei der Ausführungsform nach der Fig. 5, die wie die Schaltung nach der Fig. 4 funktioniert, ist konstruktiv vorgesehen, die Formgedächtnisfedern 48 und 60 in Reihe hintereinander anzuordnen und dergestalt seriell miteinander zu verschalten.

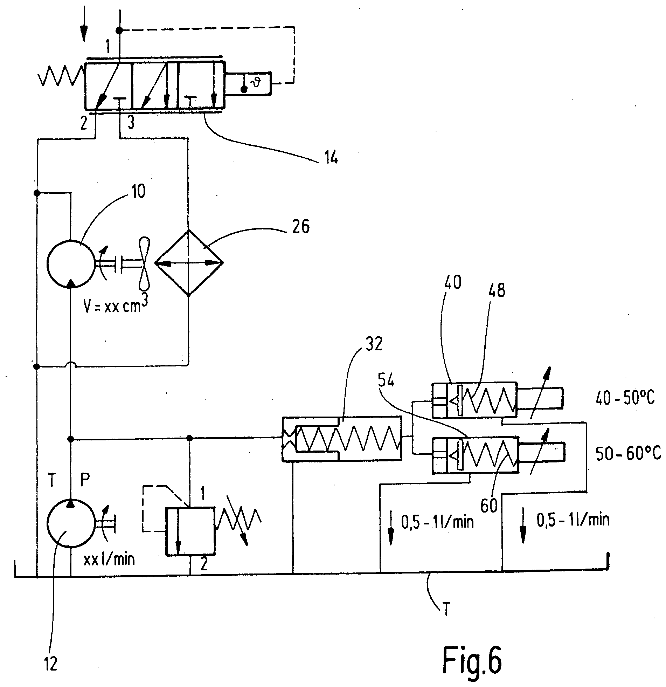

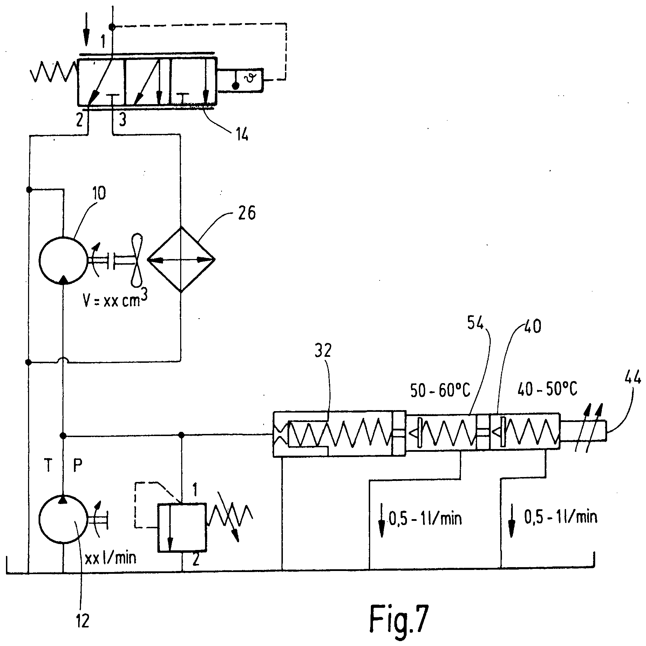

Die Lösung nach der Fig. 6 zeigt eine Lösung gleichfalls wie in Fig. 4 auf mit der Maßgabe, dass die Formgedächtnisfedern 48, 60 nunmehr mit ihren unterschiedlichen Temperaturbereichen parallel zueinander verschaltet sind. Bei der Lösung nach der Fig. 7 wird wiederum eine Grundfunktion gemäß der Schaltung nach der Fig. 4 erreicht, jedoch gibt es nunmehr zwei Vorsteuerventilsitze 42 und 58, die gemeinsam über eine Vorsteuer-Ventileinstelleinrichtung 44 jeweils ansteuerbar sind.

Alle Lösungen gemäß den Figuren 4 bis 7 beinhalten die Erfassung der Tanktemperatur des Tanks T.

Insgesamt machen die angesprochenen exemplarischen Lösungen nach den Figuren 1 bis 7 deutlich, dass das Verwenden von mehreren Thermoventilen an möglicherweise verschiedenen Orten im Hydraulikschaltplan zur Ansteuerung einer Hauptstufe einsetzbar sind. Dabei ergeben sich die folgenden Kombinationen:
a) Thermoventil als direkte Vorsteuerstufe des Hauptventils
b) wie a) und mit Platzierung eines zusätzlichen Thermoventils am Kühlerausgang
c) wie a) und mit Platzierung eines zusätzlichen Thermoventils am Eingang des Kühlers
d) wie a) und mit einer zusätzlichen Formgedächtnislegierungsfeder im Thermoventil
e) wie a) und mit einer zusätzlichen Formgedächtnislegierungsfeder im weiteren Thermoventil
f) wie a) und mit einem zusätzlich parallel geschalteten Thermoventil
g) wie a) und mit einem zusätzlichen Thermoventil als Vorsteuerstufe
h) Kombinationen aus den vorstehend gezeigten Möglichkeiten mit Platzierung der Thermoventile an verschiedenen, in den Figuren nicht näher dargestellten Orten.

Die jeweilige Feder, gebildet aus dem genannten Formgedächtnislegierungsmaterial, ändert bei Aktivierung, also bei Übersteigung einer gewissen vorgebbaren Temperatur ihre metallografische Gitterstruktur. Die Verspannung der Gitterstruktur ändert die Länge der Feder. Wird diese Längenänderung behindert, baut sich eine Kraft auf. Im kalten Zustand ist demgemäß die Formgedächtnislegierungsfeder entspannt, und der jeweilige Vorsteuerventilsitz ist geöffnet.

## Patentansprüche

1. Hydraulische Lüftersteuerung, bestehend aus mindestens
- einem Lüftermotor (10),
- einer Druckversorgungseinrichtung, insbesondere Hydropumpe (12), zum Versorgen des Lüftermotors (10) mit einem Druckmedium, insbesondere in Form von Hydrauliköl, und
- einem die Regelung der Lüftermotordrehzahl steuernden Thermoventil (40, 54),
wobei das Thermoventil (40, 54) einen Energiespeicher in Form einer Druckfeder (48, 60) aufweist, **dadurch gekennzeichnet, dass** die Druckfeder (48, 60) aus einer Formgedächtnislegierung besteht, die eine temperaturabhängige Kraft-Hub-Kennlinie besitzt.

2. Hydraulische Lüftersteuerung, bestehend aus mindestens
- einem Lüftermotor (10),
- einer Druckversorgungseinrichtung, insbesondere Hydropumpe (12), zum Versorgen des Lüftermotors (10) mit einem Druckmedium, insbesondere in Form von Hydrauliköl,
- vorzugsweise einem Kühler-Thermo-Bypassventil (14), das den Rücklauf des Druckmediums aus einer an die Lüftereinrichtung anschließbaren Arbeitshydraulik steuert,
- einem Bypass-Druckbegrenzungsventil (32), das den möglichen Fluidfluss zwischen der Druckversorgungseinrichtung (P) und einem Tankanschluss (T) steuert, und
- einem Vorsteuer-Druckbegrenzungsventil (40, 54) für die Vorsteuerung des Bypass-Druckbegrenzungsventils (32),
wobei das Vorsteuer-Druckbegrenzungsventil (40, 54) ein Thermoventil (40, 54) ist und einen Energiespeicher in Form einer Druckfeder (48, 60) aufweist, **dadurch gekennzeichnet, dass** die Druckfeder (48, 60) aus einer Formgedächtnislegierung besteht, die eine temperaturabhängige Kraft-Hub-Kennlinie besitzt.

3. Hydraulische Lüftersteuerung nach Anspruch 2, **dadurch gekennzeichnet, dass** mindestens eines der Vorsteuer-Druckbegrenzungsventile (40, 54) einen Energiespeicher, vorzugsweise in Form der Druckfeder (48, 60), bestehend aus einer thermischen Formgedächtnislegierung, aufweist.

4. Hydraulische Lüftersteuerung nach Anspruch 2 oder 3, **dadurch gekennzeichnet, dass** mindestens eines der Vorsteuer-Druckbegrenzungsventile (40, 54) medien- und/oder druckführend mit dem Federraum des Bypass-Druckbegrenzungsventils (32) verbunden ist.

5. Hydraulische Lüftersteuerung nach einem der vorstehenden Ansprüche, **dadurch gekennzeichnet, dass** verschiedene Vorsteuer-Druckbegrenzungsventile (40, 54) vorhanden sind, die jeweils einen anderen Temperaturbereich für das eingesetzte Druckmedium abdecken.

6. Hydraulische Lüftersteuerung nach einem der vorstehenden Ansprüche, **dadurch gekennzeichnet, dass** die einzelnen Vorsteuer-Druckbegrenzungsventile (40, 54) hintereinander in Reihe oder parallel zueinander geschaltet sind oder jedem Temperaturbereich zugeordnet mehrere Energiespeicher (48, 60) aufweisen, die parallel zueinander angeordnet mit unterschiedlichem Ansprechverhalten der jeweiligen Formgedächtnislegierung in einem Gehäuse eines Vorsteuer-Druckbegrenzungsventils (40) aufgenommen sind.

7. Hydraulische Lüftersteuerung nach einem der vorstehenden Ansprüche, **dadurch gekennzeichnet, dass** zumindest bei einem Teil der Vorsteuer-Druckbegrenzungsventile (40, 54) diese mit ihrem Vorsteuerraum an den Tankanschluss (T) angeschlossen sind.

8. Hydraulische Lüftersteuerung nach einem der vorstehenden Ansprüche, **dadurch gekennzeichnet, dass** mindestens ein Vorsteuer-Druckbegrenzungsventil (54) hinter einem Kühler (26) oder in Parallelschaltung zu diesem in den Versorgungskreis geschaltet ist, der aus dem Rücklauf der Arbeitshydraulik bedient wird.

9. Hydraulische Lüftersteuerung nach einem der vorstehenden Ansprüche, **dadurch gekennzeichnet, dass** zwischen der Druckversorgungseinrichtung (P) und dem Bypass-Druckbegrenzungsventil (32) eine Druckbegrenzungseinrichtung (28) in Nebenstromanordnung geschaltet ist.

10. Hydraulische Lüftersteuerung nach einem der vorstehenden Ansprüche, **dadurch gekennzeichnet, dass** zumindest in einer Schaltstellung das Kühler-Thermo-Bypassventil (14) das Druckmedium aus dem Rücklauf in den Tank (T) fördert, in einer weiteren Schaltstellung bei warmem Druckmedium eine Aufteilung zwischen Tank (T) und zu dem Kühler (26) aufteilt und bei heißem Druckmedium dieses vorrangig an den Kühler (26) weiterliefert.

## Claims

1. A hydraulic fan control consisting of at least
- a fan motor (10),
- a pressure supply device, in particular a hydraulic pump (12), for supplying the fan motor (10) with a pressurising medium, in particular in the form of hydraulic oil, and
- a thermo valve (50, 54) controlling the regulation of the rotational speed of the fan motor,
the thermo valve (40, 54) having an energy accumulator in the form of a compression spring (48, 60), **characterised in that** the compression spring (48, 60) is made of a shape memory alloy which has a temperature-dependent force/lift characteristic curve.

2. A hydraulic fan control consisting of at least
- a fan motor (10),
- a pressure supply device, in particular a hydraulic pump (12), for supplying the fan motor (10) with a pressurising medium, in particular in the form of hydraulic oil,
- preferably a cooler thermo bypass valve (14) which controls the return flow of the pressurising medium from working hydraulics that can be connected to the fan device,
- a bypass pressure control valve (32) which controls the possible fluid flow between the pressure supply device (P) and a tank connection (T), and
- a pilot pressure control valve (40, 54) for the pilot control of the bypass pressure control valve (32),
the pilot pressure control valve (40, 54) being a thermo valve (40, 54) and having an energy accumulator in the form of a compression spring (48, 60), **characterised in that** the compression spring (48, 60) is made of a shape memory alloy which has a temperature-dependent force/lift characteristic curve.

3. The hydraulic fan control according to Claim 2, **characterised in that** at least one of the pilot pressure control valves (40, 54) has an energy accumulator, preferably in the form of the compression spring (48, 60) made of a thermal shape memory alloy.

4. The hydraulic fan control according to Claim 2 or 3, **characterised in that** at least one of the pilot pressure control valves (40, 54) is connected to the spring space of the bypass pressure control valve (32) such as to convey media and/or pressure.

5. The hydraulic fan control according to any of the preceding claims, **characterised in that** there are different pilot pressure control valves (40, 54) which each cover a different temperature range for the pressurising medium used.

6. The hydraulic fan control according to any of the preceding claims, **characterised in that** the individual pilot pressure control valves (40, 54), connected one behind the other in a row or parallel to one another or assigned to each temperature range, have a number of energy accumulators (48, 60) which, arranged parallel to one another and with different responses of the respective shape memory alloy, are accommodated within a housing of a pilot pressure control valve (40).

7. The hydraulic fan control according to any of the preceding claims, **characterised in that** at least in a part of the pilot pressure control valves (40, 54) the latter are connected with their pilot space to the tank connection (T).

8. The hydraulic fan control according to any of the preceding claims, **characterised in that** at least one pilot pressure control valve (54) is connected into the supply circuit behind a cooler (26) or in parallel connection to the latter, which supply circuit is served from the return flow of the working hydraulics.

9. The hydraulic fan control according to any of the preceding claims, **characterised in that** a pressure control device (28) is connected in the secondary flow arrangement between the pressure supply device (P) and the bypass pressure control valve (32).

10. The hydraulic fan control according to any of the preceding claims, **characterised in that** at least in a switching position the cooler thermo bypass valve (14) conveys the pressurising medium from the return flow into the tank (T), in another switching position with warm pressurising medium it makes a division between the tank (T) and to the cooler (26), and with hot pressurising medium passes this mainly onto the cooler (26).

## Revendications

1. Commande de ventilateur hydraulique, constituée d'au moins
- un moteur (10) de ventilateur,
- un dispositif d'alimentation en pression, notamment une pompe (12) hydraulique, pour alimenter le moteur (10) du ventilateur en un fluide sous pression, notamment sous la forme d'huile hydraulique et
- une thermosoupape (40, 54) commandant la régulation du régime du moteur du ventilateur,
dans laquelle la thermosoupape (40, 54) a un accumulateur d'énergie sous la forme d'un ressort (48, 60) de compression, **caractérisée en ce que** le ressort (48, 60) de compression est en un alliage à mémoire de forme, qui a une courbe caractéristique force-course qui dépend de la température.

2. Commande de ventilateur hydraulique, constituée d'au moins
- un moteur (10) de ventilateur,
- un dispositif d'alimentation en pression, notamment une pompe (12) hydraulique, pour alimenter le moteur (10) du ventilateur en un fluide sous pression, notamment sous la forme d'huile hydraulique,
- de préférence, une thermosoupape (14) de dérivation à refroidisseur, qui commande le retour du fluide sous pression d'une hydraulique de travail pouvant être raccordée au dispositif de ventilateur,
- une soupape (32) de limitation de la pression de dérivation, qui commande le flux de fluide possible entre le dispositif (P) d'alimentation en pression et un raccord (T) de réservoir et
- une soupape (40, 54) pilote de limitation de la pression pour piloter la soupape (32) de limitation de la pression de dérivation,
dans laquelle la soupape (40, 54) pilote de limitation de la pression est une thermosoupape (40, 54) et a un accumulateur d'énergie sous la forme d'un ressort (48, 60) de compression, **caractérisée en ce que** le ressort (48, 60) de compression est en un alliage à mémoire de forme, qui a une courbe caractéristique force-course qui dépend de la température.

3. Commande de ventilateur hydraulique suivant la revendication 2, **caractérisée en ce qu'**au moins l'une des soupapes (40, 54) pilotes de limitation de la pression a un accumulateur d'énergie, de préférence sous la forme du ressort (48, 60) de compression, en un alliage à mémoire de forme thermique.

4. Commande de ventilateur hydraulique suivant la revendication 2 ou 3, **caractérisée en ce qu'**au moins l'une des soupapes (40, 54) pilotes de limitation de la pression est reliée de manière à conduire des fluides et/ou la pression à l'espace de ressort de la soupape (32) de limitation de la pression de dérivation.

5. Commande de ventilateur hydraulique suivant l'une des revendications précédentes, **caractérisée en ce qu'**il y a diverses soupapes (40, 54) pilotes de limitation de la pression, qui recouvrent chacune une autre plage de température du fluide sous pression utilisé.

6. Commande de ventilateur hydraulique suivant l'une des revendications précédentes, **caractérisée en ce que** les diverses soupapes (40, 54) pilotes de limitation de la pression sont montées les unes derrière les autres, en série ou en parallèle les unes avec les autres ou ont, associées à chaque plage de température, plusieurs accumulateurs (48, 60) d'énergie, qui, montés en parallèle les uns avec les autres, en ayant un mode de réponse différent de l'alliage à mémoire de forme, sont reçus dans un boîtier de la soupape (40) pilote de limitation de pression.

7. Commande de ventilateur hydraulique suivant l'une des revendications précédentes, **caractérisée en ce qu'**au moins pour une partie des soupapes (40, 54) pilotes de limitation de la pression, celles-ci sont raccordées par leur espace pilote au raccord (T) du réservoir.

8. Commande de ventilateur hydraulique suivant l'une des revendications précédentes, **caractérisée en ce qu'**au moins une soupape (54) pilote de limitation de la pression est montée derrière un refroidisseur (26) ou dans un circuit en parallèle avec celui-ci dans le circuit d'alimentation, qui fonctionne dans le retour de l'hydraulique de travail.

9. Commande de ventilateur hydraulique suivant l'une des revendications précédentes, **caractérisée en ce que**, entre le dispositif (P) d'alimentation en pression et la soupape (32) de régulation de limitation de la pression, un dispositif (28) de limitation de la pression est monté suivant un agencement de courant auxiliaire.

10. Commande de ventilateur hydraulique suivant l'une des revendications précédentes, **caractérisée en ce qu'**au moins en une position de commutation, la thermosoupape (14) de dérivation à refroidisseur véhicule le fluide sous pression du retour au réservoir (T), tandis que, dans une autre position de commutation, pour un fluide de pression tiède, elle le subdivise entre le réservoir (T) et l'envoi au refroidisseur (26), et pour un fluide sous pression chaud, celui-ci est acheminé d'une manière prépondérante au refroidisseur (26).
